# EUROPEAN PATENT SPECIFICATION

(11) **EP 1 798 521 B1**
(45) Date of publication and mention of the grant of the patent: **20.07.2016**
(21) Application number: 06025843.1
(22) Date of filing: 13.12.2006
(51) Int. Cl.: G01C 21/32, G01C 21/36

(54) **Navigation apparatus**
Navigationsvorrichtung
Appareil de navigation

(30) Priority: 14.12.2005 JP 2005360139
(43) Date of publication of application: 20.06.2007
(73) Proprietor: Alpine Electronics, Inc., Tokyo (JP)
(72) Inventor: Kazunori, Kazawa, Iwaki-city, Fukushima (JP); Koji, Nemoto, Iwaki-city, Fukushima (JP); Kazuaki, Takahashi, Iwaki-city, Fukushima (JP)
(74) Representative: Klunker . Schmitt-Nilson . Hirsch

(56) References cited:
- EP-A- 1 460 604
- EP-A- 1 526 359
- EP-A2- 0 510 939
- EP-A2- 1 146 316
- US-A1- 2002 049 532
- US-A1- 2004 066 316
- US-A1- 2004 183 700

## Description

### BACKGROUND OF THE INVENTION

### 1. Field of the Invention

The present invention relates to a technology of displaying a map in a navigation apparatus that performs location guide by using the map.

### 2. Description of the Related Art

Technologies of displaying a map in a navigation apparatus include technologies of displaying an image of a three-dimensional map (for example, refer to Japanese Unexamined Patent Application Publication No. 2004-219182). In such a technology, an image of a geographical area defined with respect to the current position is rendered to generate a three-dimensional map on the basis of map data representing the three-dimensional map.

It is preferred that a higher-quality map be displayed in a navigation apparatus.

However, the amount of processing to display a map on the basis of map data in the navigation apparatus, particularly, to display an image of a three-dimensional map is relatively great. Accordingly, displaying a fine map at a higher resolution or increasing the frequency of update of the displayed map in order to improve the quality can result in a heavier processing load on the navigation apparatus to display the map.

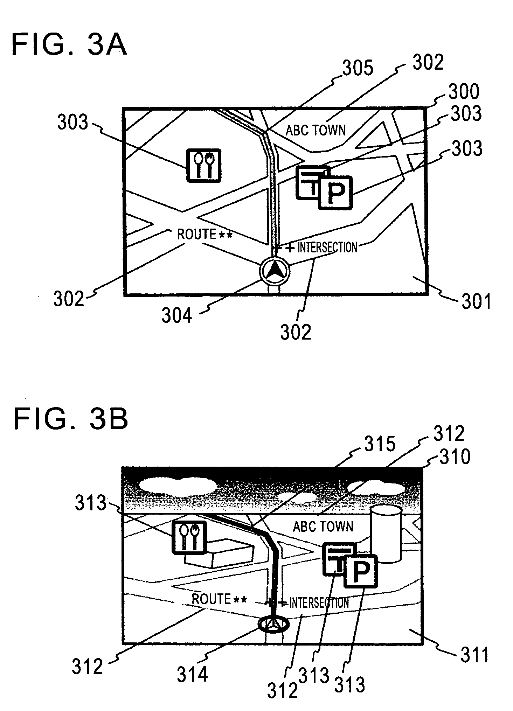

In EP 1 146 316 A there is disclosed a navigation system including speech-recognition devices for performing speech-recognition processing on input speech, language determining devices for determining a language used by a speaker based on the contents of the input speech, and navigation processing devices for performing a navigation operation corresponding to the determined language. Further, in connection with Fig. 3, map drawing data are stored in a VRAM, wherein regions A to I are each map images generated based on nine sheets of map data read from a map buffer. These nine sheets of map drawing data are stored in the VRAM. A region P is a predetermined region that is based on the center position of the screen and is displayed. When the screen center position departs from the center region, again nine sheets of map data which center on a region including the screen center position at this time are newly read and are stored in the map buffer.

Document US2004/0066316 A1 discloses a map display unit with compressed map data divided into regional blocks stored on a data storage medium. A certain region of this map data, at least including the display area, is stored decompressed in DRAM. A drawing section uses the decompressed map data to draw an image to be displayed, which is stored in a VRAM drawing memory. When the display area is out of the drawing area corresponding to drawing memory, map data of the off-area are read from the DRAM and the drawing section updates the drawing memory.

### SUMMARY OF THE INVENTION

Accordingly, it is an object of the present invention to reduce the processing load for display of a map in a navigation apparatus.

The invention is directed to a navigation apparatus according to claim 1.

The region display list includes a drawing command to request drawing of each graphic element in the map of the region. In this case, the graphic engine performs coordinate conversion to the graphic elements represented by the drawing command included in the region display list concerning each region, at least part of which is included within the map display range, so that the graphic elements are included in the map of the map display range, and draws the converted graphic elements to draw the image of the map of the map display range as the image of the map to be displayed.

The region map data may define a three-dimensional map in the region and the region display list may include three-dimensional data concerning each graphic element in the three-dimensional map of the region. In this case, the graphic engine renders, with respect to a predetermined point of view, an area corresponding to the map display range in a virtual three-dimensional world being a collection of the three-dimensional data included in the region display list concerning the region, at least part of which is included within the map display range, to draw the image of the three-dimensional map of the map display range as the image of the map to be displayed.

The navigation apparatus having the above configuration uses the region display list that has been stored in the region display list storing means to draw the map to be displayed and does not generate the region display list concerning the region for which the stored region display list can be used, if the region display list that has been stored in the region display list storing means concerns the region, at least part of which is included in the map to be displayed. Accordingly, it is possible to reduce the processing load for the generation of the region display list and the storage of the region display list in the region display list storing means.

When the region map data defines the three-dimensional map in the region, the navigation apparatus may further include current-position calculating means for calculating a current position and current-position displaying means for displaying a current position mark representing the current position at a position on the displayed map, corresponding to the calculated current position. The graphic engine does not need to render a three-dimensional object in front of the position corresponding to the current position in the virtual three-dimensional world with respect to the point of view used in the rendering, among three-dimensional objects represented by the three-dimensional data.

In this case, the region display list that has been stored in the region display list storing means is used and the three-dimensional object in front of the current position in the virtual three-dimensional world with respect to the point of view used in the rendering is not rendered, so that a user can easily recognize the current position mark.

If the region display list storing means does not have the empty space sufficient to store the generated region display list the region display list generating means may delete the region display list selected according to predetermined criteria from the region display list storing means. In this case, appropriately setting the predetermined criteria to use the limited storage space of the region display list storing means allows the processing load for the generation of the region display list and the storage of the region display list in the region display list storing means to be reduced.

2. The graphic engine does not draw the image of the map on the basis of the region display list concerning each region, at least part of which is included within the map display range, outside the map display range.

In this case, the processing load for the drawing of the map on the graphic engine can be reduced.

According to the present invention, it is possible to reduce the processing load for display of a map on the navigation apparatus.

### BRIEF DESCRIPTION OF THE DRAWINGS

Fig. 1 is a block diagram showing an example of the configuration of a navigation system according to an embodiment of the present invention;
Fig. 2 shows the content of map data stored in the navigation system according to the embodiment of the present invention;
Figs. 3A and 3B show examples of screens displayed in the navigation system according to the embodiment of the present invention;
Figs. 4A and 4B show the structure of a VRAM in the navigation system according to the embodiment of the present invention;
Figs. 5A and 5B show a VRAM mapping table and a DL management table, respectively, in the navigation system according to the embodiment of the present invention;
Figs. 6A to 6D show display lists and system calls used for displaying guide images in the navigation system according to the embodiment of the present invention;
Fig. 7 shows an example illustrating how to generate a two-dimensional map image in the navigation system according to the embodiment of the present invention;
Fig. 8 shows an example illustrating how to generate a three-dimensional map image in the navigation system according to the embodiment of the present invention;
Fig. 9 is a flowchart showing a process of drawing a 2D guide image in the navigation system according to the embodiment of the present invention;
Fig. 10 shows another example illustrating how to generate the two-dimensional map image in the navigation system according to the embodiment of the present invention; and
Fig. 11 shows another example illustrating how to generate the three-dimensional map image in the navigation system according to the embodiment of the present invention.

### DESCRIPTION OF THE PREFERRED EMBODIMENTS

Embodiments of the present invention will now be described with reference to the attached drawings.

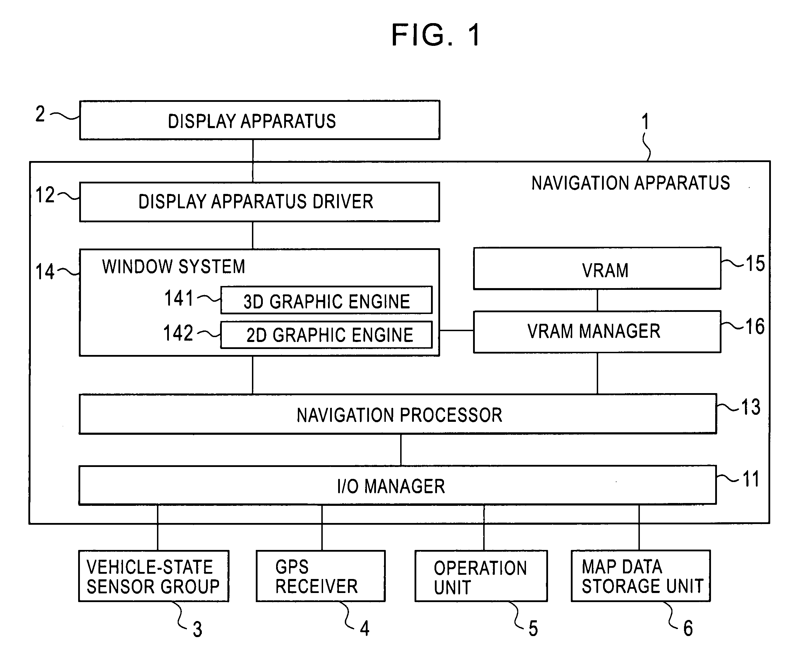

Fig. 1 is a block diagram showing an example of the configuration of a navigation system according to an embodiment of the present invention. The navigation system according to the embodiment of the present invention is mounted in a car.

Referring to Fig. 1, the navigation system includes a navigation apparatus 1, a display apparatus 2, a vehicle-state sensor group 3, a global positioning system (GPS) receiver 4, an operation unit 5, and a map data storage unit 6, which is a storage device, such as a digital versatile disk (DVD) drive or a hard disk drive (HDD), storing map data representing a map. The vehicle-state sensor group 3 includes a directional sensor, such as an angular acceleration sensor or a geomagnetic sensor, and a vehicle speed sensor, such as a vehicle speed pulse sensor. The vehicle-state sensor group 3 detects a state of the vehicle.

The navigation apparatus 1 includes an input-output (I/O) manager 11, a display apparatus driver 12, a navigation processor 13, a window system 14, a video random access memory (VRAM) 15, and a VRAM manager 16. The I/O manager 11 controls input and output between the navigation apparatus 1 and the vehicle-state sensor group 3, the GPS receiver 4, the operation unit 5, and the map data storage unit 6. The display apparatus driver 12 controls display in the display apparatus 2. The window system 14 displays a map in the display apparatus 2 via the display apparatus driver 12 in response to a request from the navigation processor 13.

The window system 14 includes a two-dimensional (2D) graphic engine 141 and a three-dimensional (3D) graphic engine 142. The 2D graphic engine 141 provides the navigation processor 13 with a function of drawing and displaying a 2D graphic. The 3D graphic engine 142 provides the navigation processor 13 with a function of drawing and displaying a 3D graphic. The VRAM 15 includes data concerning graphics which the navigation apparatus 1 uses the 2D graphic engine 141 and the 3D graphic engine 142 to draw. The VRAM manager 16 manages and controls the VRAM 15.

The navigation apparatus 1 described above may be an electronic computer which is hardware having a common structure and which includes a microprocessor, a memory, and peripheral devices including a graphic processor. In this case, the components in the navigation apparatus 1 may be realized as processes embodied by the microprocessor that executes programs prepared in advance. The programs may be supplied to the navigation apparatus 1 through a storage medium or an appropriate communication path. The 2D graphic engine 141 and the 3D graphic engine 142 may use the functions of the graphic processor to draw 2D graphics and 3D graphics, respectively.

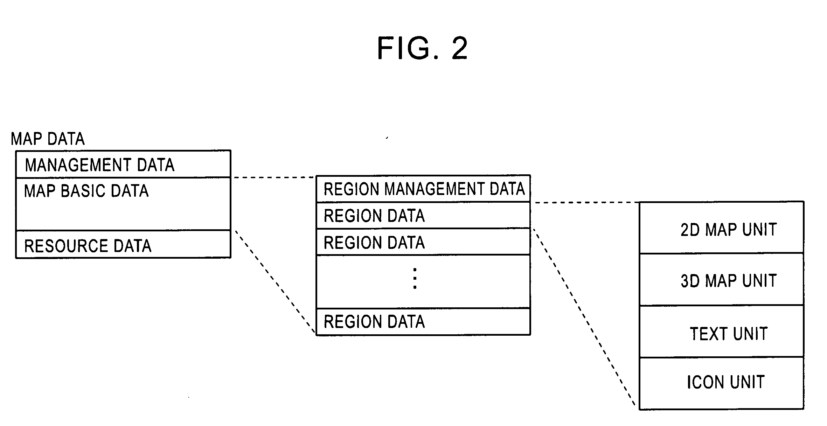

Fig. 2 shows the content of map data stored in the map data storage unit 6.

As shown in Fig. 2, the map data includes management data, map basic data representing a map, and resource data. The production date and time etc. of the map data is described in the management data.

The map basic data includes region data and region management data. The region data is provided for every region. For example, correspondence between the geographical range of each region and the region data and correspondence between each region and the region number, which is an identifier of the region, are described in the region management data.

Each region data includes a 2D map unit, a 3D map unit, a text unit, and an icon unit. The 2D map unit indicates a two-dimensional map within the corresponding region. The 3D map unit indicates a three-dimensional map within the corresponding region. The text unit indicates a text representing, for example, a place name or a route name located on the two-dimensional or three-dimensional map within the corresponding region. The icon unit indicates an icon located on the two-dimensional or three-dimensional map within the corresponding region. The icon represents the position and type of a point of interest (POI) which is selected in advance and in which a user will be interested. A graphic representing the type of a point indicated by each icon is used as the icon.

The resource data in the map data includes an information resource, such as color data or graphic data, of each region. The information resource is commonly used when a map is drawn in accordance with the region data.

In the configuration described above, the navigation processor 13 uses outputs from the vehicle-state sensor group 3 and the GPS receiver 4, acquired through the I/O manager 11, and the map basic data in the map data, read out from the map data storage unit 6, to repeatedly calculate a most probable coordinate as the current position and a most probable direction as the current traveling direction by, for example, map matching to determine the calculated coordinate and direction to be the current position and the current traveling direction, respectively. In addition, when a destination is specified by a user with the operation unit 5 and is supplied to the navigation processor 13 via the I/O manager 11, the navigation processor 13 receives the specified destination and calculates a route having a minimum cost from the calculated current position to the destination as a recommended route on the basis of a predetermined cost model, such as a minimum distance model, by using the map basic data read out from the map data storage unit 6. The navigation processor 13 stores the calculated recommended route, in addition to the specified destination.

The navigation processor 13 uses the 2D graphic engine 141 or the 3D graphic engine 142 in the window system 14 to display a guide image in the display apparatus 2.

The navigation apparatus 1 has two display modes including a two-dimensional map display mode and a three-dimensional map display mode, which can be selectively set by the user.

When the two-dimensional map display mode is set, the navigation processor 13 uses the 2D graphic engine 141 to display, on a 2D map image 301 representing a two-dimensional map, a guide image 300 including texts 302 representing a plane name etc. on the two-dimensional map, icons 303 representing the POIs, described above, on the two-dimensional map, a current position graphic 304 representing the current position calculated on the two-dimensional map, and so on, as shown in Fig. 3A. If a recommended route is held within a map display range, which is a geographical range on the two-dimensional map represented by the 2D map image 301, a recommended route graphic 305 representing part of the held recommended route toward the destination with respect to the current position on the two-dimensional map is further shown in the guide image 300 on the 2D map image 301. If a destination is held within the map display range, a destination graphic (not shown) representing the held destination on the two-dimensional map is further shown in the guide image 300 on the 2D map image 301.

The map display range, which is a geographical range on the two-dimensional map represented by the 2D map image 301, is defined in accordance with a reference position, a display direction, and a display scale as a geographical range around the reference position, having a predetermined size determined by using the determined display direction and the determined display scale. The navigation processor 13 normally sets the current position as the reference position, the calculated current traveling direction as the display direction, and a scale determined in accordance with user settings and initial settings set in advance as the display scale. During scrolling in response to a map scrolling operation by the user, the navigation processor 13 sets a position determined by the user operation as the current position, a direction selected by the user as the display direction, and a scale determined in accordance with the user settings and initial settings set in advance as the display scale.

When the three-dimensional map display mode is set, the navigation processor 13 uses the 3D graphic engine 142 to display, on a 3D map image 311 representing a three-dimensional map, a guide image 310 including texts 312 representing a plane name etc. on the three-dimensional map, icons 313 representing the POIs, described above, on the three-dimensional map, a current position graphic 314 representing the current position calculated on the three-dimensional map, and so on, as shown in Fig. 3B. If a recommended route is held within a map display range, which is a geographical range on the three-dimensional map represented by the 3D map image 311, a recommended route graphic 315 representing part of the held recommended route toward the destination with respect to the current position on the three-dimensional map is further shown in the guide image 310 on the 3D map image 311. If a destination is held within the map display range, a destination graphic (not shown) representing the held destination on the three-dimensional map is further shown in the guide image 310 on the 3D map image 311.

The map display range, which is a geographical range on the three-dimensional map represented by the 3D map image 311, is defined as a range yielded when the ground is observed from a point-of-view position set over the ground in a set line-of-sight direction at a set angle of view. The navigation processor 13 normally sets, as the point-of-view position, a position a distance corresponding to the above-described display scale above a position that is apart from the calculated current position in a direction opposite to the calculated current traveling direction by a distance corresponding to the above-described display scale. The navigation processor 13 normally sets, as the line-of-sight direction, a direction with respect to the point-of-view position toward a position that is apart from the calculated current position in the calculated current traveling direction by a distance corresponding to the above-described display scale. The navigation processor 13 normally sets, as the angle of view, an angle defined in advance by two directions orthogonal to the line-of-sight direction. The two directions orthogonal to the line-of-sight direction mean a direction orthogonal to a plane including three positions: the current position, the point-of-view position, and a position that is apart from the current position in the calculated current traveling direction by an arbitrary distance, and a direction orthogonal to the line-of-sight direction in the plane. During scrolling in response to a map scrolling operation by the user, the navigation processor 13 sets the point-of-view position, the line-of-sight direction, and the angle of view in accordance with the user operation.

The navigation processor 13 writes display lists (DLs) in the VRAM 15 and issues system calls to request drawing of the written DLs to the 2D graphic engine 141 or the 3D graphic engine 142 to display the guide image 300 or the guide image 310 in the display apparatus 2.

The navigation processor 13 writes text drawing DLs, icon drawing DLs, guide graphic drawing DLs, and 2D map image drawing DLs in the VRAM 15 when the two-dimensional map display mode is set. The texts 302 provided in the guide image 300 in Fig. 3A are described in the text drawing DLs. The icons 303 provided in the guide image 300 in Fig. 3A are described in the icon drawing DLs. The current position graphic 304, the recommended route graphic 305, and the destination graphic provided in the guide image 300 in Fig. 3A are described in the guide graphic drawing DLs. A two-dimensional region map of each region, at least part of which is included within the map display range of the 2D map image 301 drawn in the guide image 300 in Fig. 3A, is described in the 2D map image drawing DL.

The navigation processor 13 writes text drawing DLs, icon drawing DLs, guide graphic drawing DLs, and 3D map image drawing DLs in the VRAM 15 when the three-dimensional map display mode is set. The texts 312 provided in the guide image 310 in Fig. 3B are described in the text drawing DLs. The icons 313 provided in the guide image 310 in Fig. 3B are described in the icon drawing DLs. The current position graphic 314, the recommended route graphic 315, and the destination graphic provided in the guide image 310 in Fig. 3B are described in the guide graphic drawing DLs. A three-dimensional region map of each region, at least part of which is included within the map display range of the 3D map image 311 drawn in the guide image 310 in Fig. 3B, is described in the 3D map image drawing DL.

The navigation processor 13 generates the text drawing DLs in each display mode, the icon drawing DLs in each display mode, the 2D map image drawing DLs, and the 3D map image drawing DLs for every region, and writes the generated DLs in the VRAM 15.

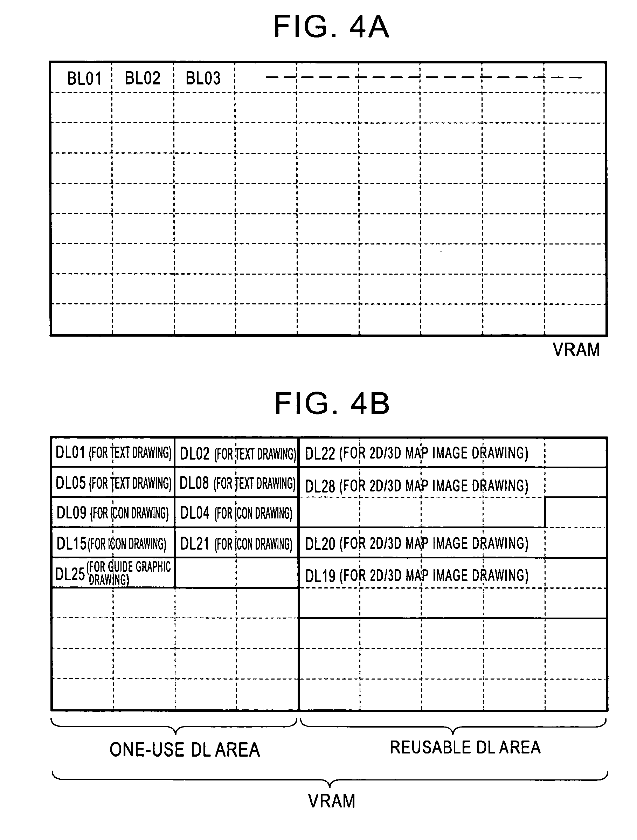

Figs. 4A and 4B show the storage space in the VRAM 15. As shown in Fig. 4A, the storage space in the VRAM 15 is divided into multiple blocks each having a predetermined space, and a block number BL # is allocated to each block.

As shown in Fig. 4B, the storage space in the VRAM 15 is grouped into a one-use DL area including multiple blocks and a reusable DL area including multiple blocks. The text drawing DLs, the icon drawing DLs, and the guide graphic drawing DLs are written in the one-use DL area by the navigation processor 13. The 2D map image drawing DLs and the 3D map image drawing DLs are written in the reusable DL area by the navigation processor 13.

The writing of the DLs is controlled by the VRAM manager 16.

Specifically, when writing of a DL is requested by the navigation processor 13, the VRAM manager 16 allocates an area including empty blocks corresponding to the data capacity of the requested DL as the area of the DL and writes the requested DL in the allocated area. If the requested DL is any of the text drawing DL, the icon drawing DL, or the guide graphic drawing DL, the VRAM manager 16 allocates an area including empty blocks in the one-use DL area, corresponding to the data capacity of the requested DL, as the area of the DL. If the requested DL is the 2D map image drawing DL or the 3D map image drawing DL, the VRAM manager 16 allocates an area including empty blocks in the reusable DL area, corresponding to the data capacity of the requested DL, as the area of the DL. The multiple empty blocks allocated to the area of one DL may be multiple noncontinuous blocks in the VRAM 15. The empty blocks mean blocks that are not allocated to the area of any DL.

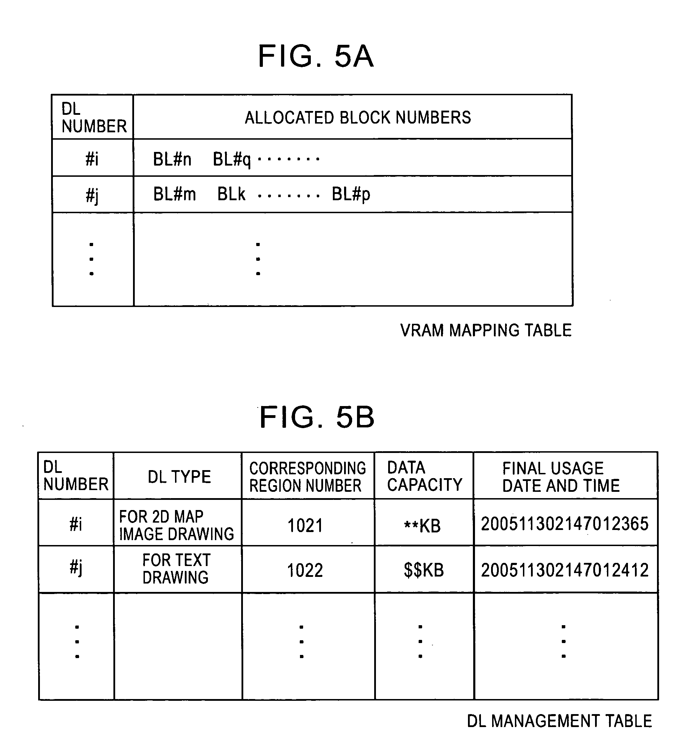

The VRAM manager 16 holds a VRAM mapping table, shown in Fig. 5A, to manage the area of each DL.

As shown in Fig. 5A, the VRAM mapping table includes entries for every DL stored in the VRAM 15. A DL number, which is an identifier of the DL, and allocated block numbers, which indicate the numbers of blocks allocated to the areas of the DL, are described in each entry.

The navigation processor 13 holds a DL management table, shown in Fig. 5B, to manage the DLs written in the VRAM 15.

As shown in Fig. 5B, the DL management table includes entries for every DL that has been written in the VRAM 15 and has not been deleted from the VRAM 15 by the navigation processor 13. A DL number, a DL type, a corresponding region number, a data capacity, and a final usage date and time are described in each entry. The DL number is the identifier of the DL. The DL type indicates a type of the DL, which is the text drawing DL, the icon drawing DL, the guide graphic drawing DL, the 2D map image drawing DL, or the 3D map image drawing DL. The corresponding region number indicates the number of a region corresponding to the DL. The data capacity indicates the number of bytes of the DL. The final usage date and time indicates a date and time when the DL was finally used. The region number is described only when the DL is not the guide graphic drawing DL. The date and time when the DL was finally used, described in the final usage date and time, is a date and time when the system call to request drawing of the DL was finally issued.

An outline of a process of drawing the 2D map image 301, shown in Fig. 3A, by using the 2D map image drawing DLs will now be described.

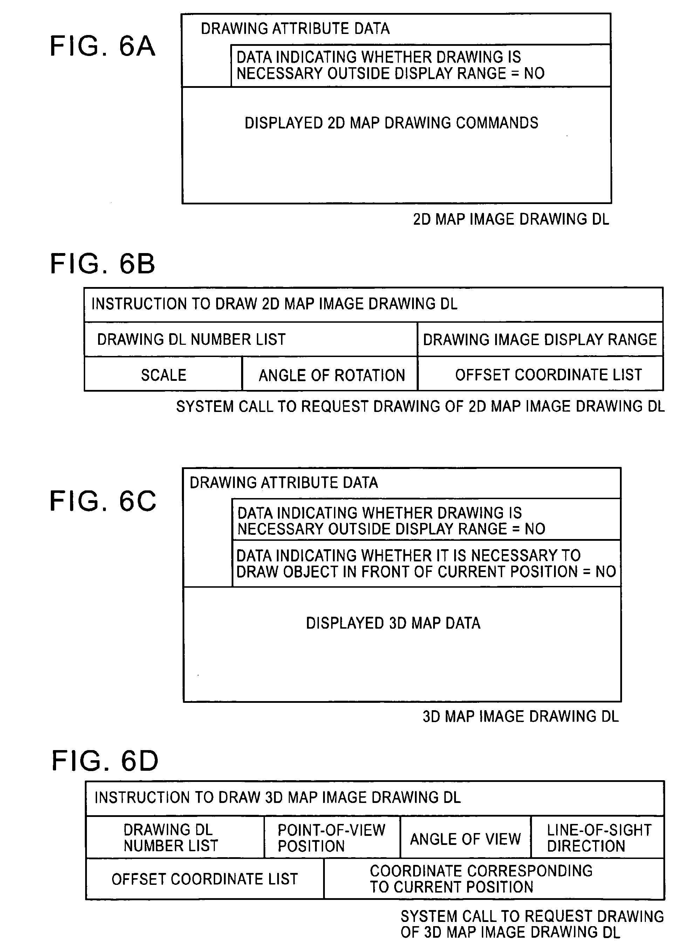

As shown in Fig. 6A, the 2D map image drawing DL includes drawing attribute data and displayed 2D map drawing commands. The drawing attribute data includes data indicating whether drawing is necessary outside the display range, which is set to "YES" or "NO".

As shown in Fig. 6B, a system call to request drawing of the 2D map image drawing DLs includes an instruction to draw the 2D map image drawing DLs, which is an operation code requesting drawing of the 2D map image drawing DLs. The system call also includes a drawing DL number list, which indicates the numbers of the 2D map image drawing DLs to be drawn, a drawing image display range, a scale, an angle of rotation, and an offset coordinate list, which are operands.

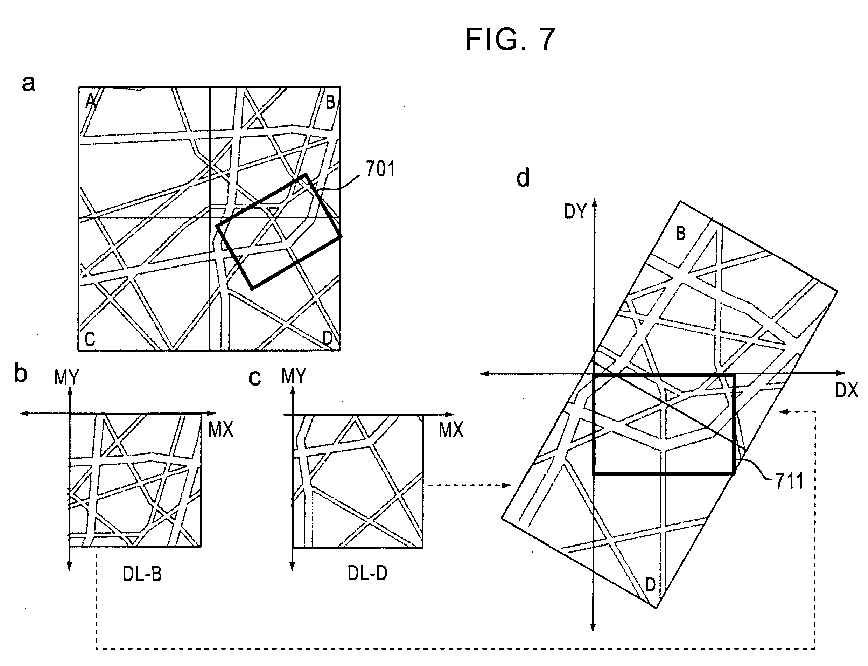

When regions A, B, C, and D are provided and a map display range 701 is calculated, as shown by a in Fig. 7, the navigation processor 13 reads out the 2D map units in the region data concerning the regions B and D, at least part of which is included within the map display range 701, from the map data storage unit 6. The navigation processor 13 then generates a DL-B, which is the 2D map image drawing DL of the region B, and a DL-D, which the 2D map image drawing DL of the region D, and writes the generated DL-B and DL-D in the VRAM 15.

The data indicating whether drawing is necessary outside the display range in the drawing attribute data in the 2D map image drawing DL-B for the region B is set to "NO". The displayed 2D map drawing commands in the DL-B includes drawing commands which request drawing of graphic elements in the two-dimensional map of the region B, shown by b in Fig. 7, and which the 2D graphic engine 141 can interpret. The two-dimensional map is defined by the 2D map unit in the region data concerning the region B and display settings set by the user.

Similarly, the data indicating whether drawing is necessary outside the display range in the drawing attribute data in the 2D map image drawing DL-D for the region D is set to "NO". The displayed 2D map drawing commands in the DL-D includes drawing commands which request drawing of graphic elements in the two-dimensional map of the region D, shown by c in Fig. 7, and which the 2D graphic engine 141 can interpret. The two-dimensional map is defined by the 2D map unit in the region data concerning the region D and display settings set by the user.

The display settings set by the user, defining the two-dimensional map to be displayed, include the settings of colors and patterns of the graphic elements in the two-dimensional map to be displayed.

The two-dimensional map of the region B, defined by the displayed 2D map drawing commands in the DL-B, and the two-dimensional map of the region D, defined by the displayed 2D map drawing commands in the DL-D, are drawn in coordinate spaces MX-MY set for every DL. The displayed 2D map drawing commands in the DL-B and the displayed 2D map drawing commands in the DL-D are set so that the two-dimensional map of the region B, defined by the displayed 2D map drawing commands in the DL-B, and the two-dimensional map of the region D, defined by the displayed 2D map drawing commands in the DL-D, have the same scale and are two-dimensionally arranged in the same direction.

After the DL-B and the DL-D are stored in the VRAM 15, the navigation processor 13 generates the system call to request drawing of the 2D map image drawing DLs, shown in Fig. 6B, and issues the generated system call to the 2D graphic engine 141. The drawing DL number list, which is an operand of the system call, includes the DL numbers of the DL-B and the DL-D.

An amount of expansion, an amount of rotation, and an amount of shift determining a coordinate conversion matrix are described in the scale, the angle of rotation, and the offset coordinate list, respectively, which are operands of the system call. The coordinate conversion matrix is used to arrange the two-dimensional map of the region B, defined in the DL-B shown by b in Fig. 7, and the two-dimensional map of region D, defined in the DL-D shown by c in Fig. 7, on a drawing coordinate space DX-DY in accordance with the positional relationship between the regions B and D in the above-described direction on the above-described scale, as shown by d in Fig. 7. Since the two-dimensional map of the region B, defined by the displayed 2D map drawing commands in the DL-B, and the two-dimensional map of the region D, defined by the displayed 2D map drawing commands in the DL-D, have the same scale and are two-dimensionally arranged in the same direction in this example, the DL-B and the DL-D have the same amount of expansion and amount of rotation and differs only in the amount of shift. A list of the different amounts of shift is described in the offset coordinate list.

A range 711 to be displayed in the display apparatus 2, within the image drawn in the drawing coordinate space DX-DY, is described in the drawing image display range in the system call. The range 711 is generated by arranging the two-dimensional map of the region B and the two-dimensional map of the region D, in the manner shown by d in Fig. 7. The range 711 described in the drawing image display range is set so that the geographical range corresponding to the two-dimensional map drawn in the range 711 coincides with the map display range 701.

After receiving the system call described above, the 2D graphic engine 141 performs coordinate conversion to graphics which the 2D graphic engine 141 is requested to draw with the drawing commands included in the displayed 2D map drawing commands in the DL-B and the DL-D specified in the drawing DL number list, on the drawing coordinate space DX-DY in accordance with the scale, the angle of rotation, and the offset coordinate list, which are the operands in the system call, and draws the converted graphics in order to generate the map image shown by d in Fig. 7. The 2D map image within the range 711 described in the drawing image display range being the operand in the system call, within the drawn image, is used as the 2D map image 301 shown in Fig. 3A. As described above, the range 711 described in the drawing image display range is set by the navigation processor 13 so that the geographical range corresponding to the two-dimensional map drawn in the range 711 coincides with the map display range 701.

If the data indicating whether drawing is necessary outside the display range in the drawing attribute data in the 2D map image drawing DL is set to "NO", the 2D graphic engine 141 does not draw any graphic in accordance with the drawing commands outside the range 711 on the drawing coordinate space DX-DY. As a result, the drawing processing load on the 2D graphic engine 141 can be reduced.

The 2D map image 301 shown in Fig. 3A is drawn by using the 2D map image drawing DLs by the process described above.

An outline of a process of drawing the 3D map image 311, shown in Fig. 3B, by using the 3D map image drawing DLs will now be described.

As shown in Fig. 6C, the 3D map image drawing DL includes drawing attribute data and displayed 3D map data. The drawing attribute data includes data indicating whether drawing is necessary outside the display range, which is set to "YES" or "NO", and data indicating whether it is necessary to draw an object in front of the current position, which is set to "YES" or "NO".

As shown in Fig. 6D, a system call to request drawing of the 3D map image drawing DLs includes an instruction to draw a 3D map image drawing DLs, which is an operation code requesting drawing of the 3D map image drawing DLs. The system call also includes a drawing DL number list, which indicates the numbers of the 3D map image drawing DLs to be drawn, a point-of-view position, an angle of view, a line-of-sight direction, an offset coordinate list, and a coordinate corresponding to the current position, which are operands.

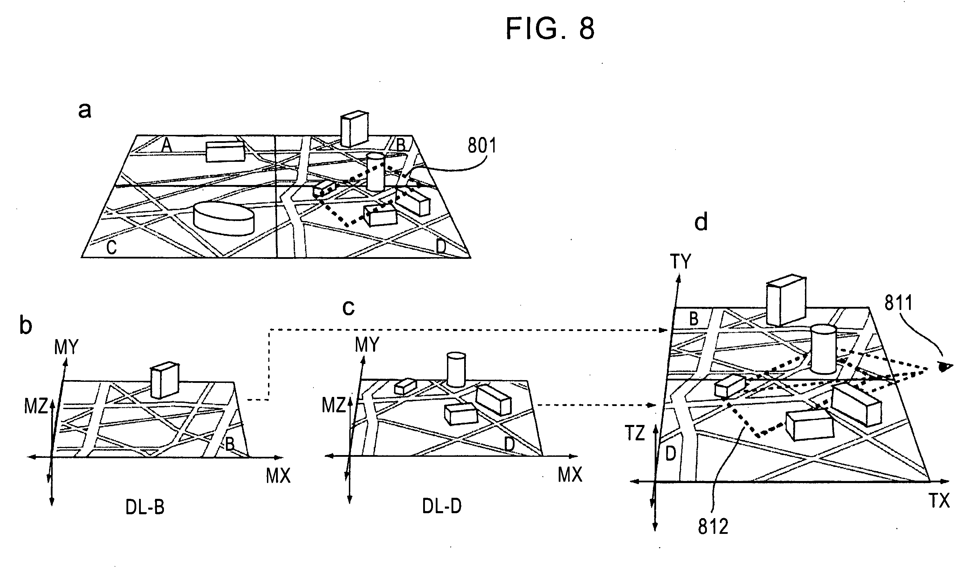

When regions A, B, C, and D are provided and a map display range 801 is calculated, as shown by a in Fig. 8, the navigation processor 13 reads out the 3D map units in the region data concerning the regions B and D, at least part of which is included within the map display range 801, from the map data storage unit 6. The navigation processor 13 then generates a DL-B, which is the 3D map image drawing DL of the region B, and a DL-D, which the 3D map image drawing DL of the region D, and writes the generated DL-B and DL-D in the VRAM 15.

Both the data indicating whether drawing is necessary outside the display range and the data indicating whether it is necessary to draw an object in front of the current position, in the drawing attribute data in the 3D map image drawing DL-B for the region B, are set to "NO". The displayed 3D map data in the DL-B includes data concerning a three-dimensional model representing a three-dimensional map of the region B, shown by b in Fig. 8. The three-dimensional map is defined by the 3D map unit in the region data concerning the region B and display settings set by the user. The data concerning the three-dimensional model is not in the format of the 3D map unit but in a format which the 3D graphic engine 142 can interpret.

Similarly, both the data indicating whether drawing is necessary outside the display range and the data indicating whether it is necessary to draw an object in front of the current position, in the drawing attribute data in the 3D map image drawing DL-D for the region D, are set to "NO". The displayed 3D map data in the DL-D includes data concerning a three-dimensional model representing a three-dimensional map of the region D, shown by c in Fig. 8. The three-dimensional map is defined by the 3D map unit in the region data concerning the region D and display settings set by the user.

The display settings set by the user, defining the three-dimensional map to be displayed, include the settings of colors and patterns of the elements in the three-dimensional map to be displayed and the settings of types of three-dimensional objects to be displayed (for example, the three-dimensional object representing a building four or less stories in height is not displayed).

The three-dimensional map represented by the three-dimensional model of the region B, defined by the displayed 3D map data in the DL-B, and the three-dimensional map represented by the three-dimensional model of the region D, defined by the displayed 3D map data in the DL-D, are drawn in coordinate spaces MX-MY-MZ set for every DL. The displayed 3D map data in the DL-B and the displayed 3D map data in the DL-D are set so that the three-dimensional map represented by the three-dimensional model of the region B, defined by the displayed 3D map data in the DL-B, and the three-dimensional map represented by the three-dimensional model of the region D, defined by the displayed 3D map data in the DL-D, have the same scale and are arranged in the same MX direction and in the same MY direction.

After the DL-B and the DL-D are stored in the VRAM 15, the navigation processor 13 generates the system call to request drawing of the 3D map image drawing DLs, shown in Fig. 6D, and issues the generated system call to the 3D graphic engine 142. The drawing DL number list, which is an operand of the system call, includes the DL numbers of the DL-B and the DL-D.

An amount of shift is described in the offset coordinate list, which is an operand in the system call. The amount of shift is used to arrange the three-dimensional model representing the three-dimensional map of the region B, defined by the DL-B and shown by b in Fig. 8, and the three-dimensional model representing the three-dimensional map of the region D, defined by the DL-D and shown by c in Fig. 8, on a drawing coordinate space TX-TY-TZ in accordance with the positional relationship between the regions B and D, as shown by d in Fig. 8.

The point-of-view position, the angle of view, and the line-of-sight direction on the drawing coordinate space TX-TY-TZ are described in the point-of-view position, the angle of view, and the line-of-sight direction, which are operands in the system call. The point-of-view position, the angle of view, and the line-of-sight direction are set so that the relationship between the point-of-view position, the line-of-sight direction, and the geographical range, described above, is satisfied between the three-dimensional maps of the regions B and D, represented by the three-dimensional models arranged as shown by d in Fig. 8.

The position on the drawing coordinate space TX-TY-TZ, corresponding to the calculated current position, (the coordinate corresponding to the current position on the three-dimensional map represented by the three-dimensional model arranged as shown in by d Fig. 8) is described in the coordinate corresponding to the current position, which is an operand in the system call.

After receiving the system call described above, the 3D graphic engine 142 arranges the three-dimensional models, represented by the displayed 3D map data concerning the DL-B and the DL-D indicated in the drawing DL number list, on the drawing coordinate space TX-TY-TZ in accordance with the offset coordinate list, which is an operand in the system call, in the manner shown by d in Fig. 8. The 3D graphic engine 142 uses the point-of-view position, the angle of view, and the line-of-sight direction, which are operands in the system call, to draw (render) a two-dimensional image yielded when the three-dimensional map of the regions B and D, represented by the three-dimensional model arranged in the manner shown by d in Fig. 8, is observed from a point-of-view position 811 in the line-of-sight direction at the angle of view and arranges a sky image simulating the sky over the drawn two-dimensional image in order to draw the 3D map image 311 shown in Fig. 3B.

If the data indicating whether drawing is necessary outside the display range in the drawing attribute data in the 3D map image drawing DL is set to "NO", the 3D graphic engine 142 does not draw various objects, such as three-dimensional objects, which are defined by the point-of-view position, the line-of-sight direction, and the angle of view, which are drawn in the 3D map image 311, and which are arranged outside a range 812 in the drawing coordinate space TX-TY-TZ. As a result, the drawing processing load on 3D graphic engine 142 can be reduced. If the data indicating whether it is necessary to draw an object in front of the current position is set to "NO", the 3D graphic engine 142 does not draw three-dimensional objects in front of the coordinate corresponding to the current position, which is an operand in the system call, viewed from the point-of-view position 811. As a result, it is possible to ensure good visibility of the current position graphic 314 displayed in the guide image 310 when the 3D map image 311 is drawn in the manner described above.

The 3D map image 311 shown in Fig. 3B is drawn by using the DD map image drawing DLs by the process described above.

The navigation processor 13 performs a process of drawing a 2D guide image to display the guide image 300 shown in Fig. 3A when the two-dimensional map display mode is set, and performs a process of drawing a 3D guide image to display the guide image 310 shown in Fig. 3B when the three-dimensional map display mode is set.

The process of drawing the 2D map image 301 shown in Fig. 3A by using the 2D map image drawing DLs, described with reference to Figs. 6A, 6B, and 7, is performed by the navigation processor 13 and the 2D graphic engine 141 during the process of drawing a 2D guide image. The process of drawing the 3D map image 311 shown in Fig. 3B by using the 3D map image drawing DLs, described with reference to Figs. 6C, 6D, and 8, is performed by the navigation processor 13 and the 3D graphic engine 142 during the process of drawing a 3D guide image.

The process of drawing a 2D guide image to display the guide image 300 shown in Fig. 3A will now be described.

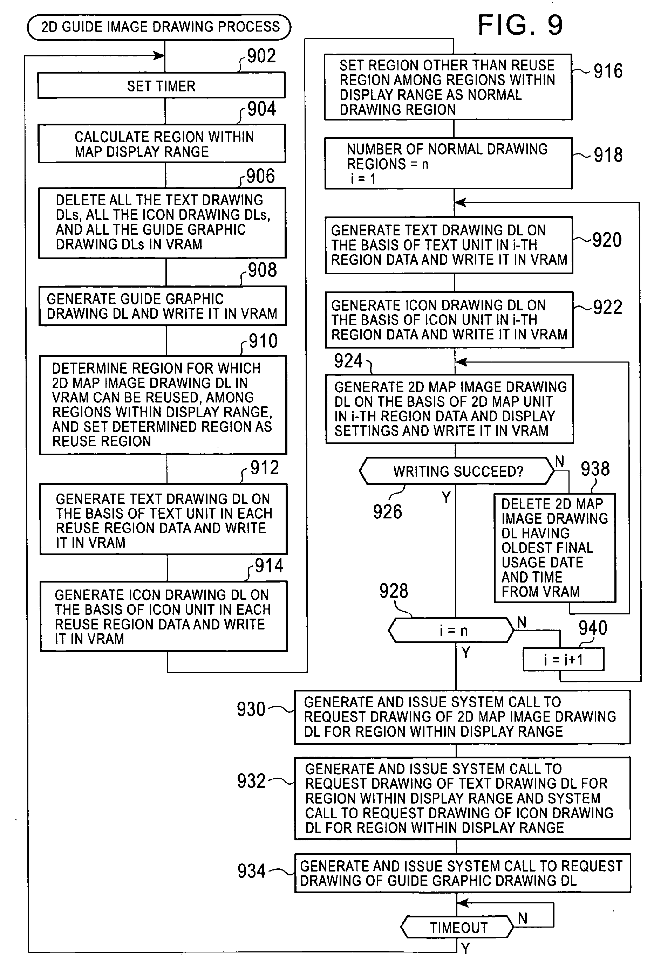

Fig. 9 is a flowchart showing an example of the process of drawing a 2D guide image.

Referring to Fig. 9, in Step S902, the process sets a timer used for determining a time interval (refresh rate) at which the display of the guide image 300 is updated. In Step S904, the process calculates regions, at least part of which is included within the map display range set in the manner described above.

In Step S906, the process requests the VRAM manager 16 to delete all of the text drawing DLs, the icon drawing DLs, and the guide graphic drawing DLs in the one-use DL area in the VRAM 15. The VRAM manager 16 deletes all of the text drawing DLs, the icon drawing DLs, and the guide graphic drawing DLs in the one-use DL area, deletes the entries for the deleted DLs in the VRAM mapping table, and releases the blocks allocated to the DL areas of the deleted DLs. The navigation processor 13 deletes the entries for the deleted DLs in the DL management table.

In Step 5908, the navigation processor 13 generates the guide graphic drawing DLs used for drawing the current position graphic 304, the recommended route graphic 305, and the destination graphic to be included in the guide image 300 on the basis of the current position, the current traveling direction, the recommended route, the destination, the map display range, the direction in which the map is displayed, and the scale on which the map is displayed, and requests the VRAM manager 16 to write the generated guide graphic drawing DLs in the VRAM 15.

In Step S910, the navigation processor 13 refers to the DL management table to set the regions, the 2D map image drawing DLs for which have been already stored in the VRAM 15, among the regions calculated in Step S904, as reuse regions. It is determined that the 2D map image drawing DL for a region is stored in the VRAM 15 if the DL management table has any entry in which the region number of the region is registered as the corresponding region number and the 2D map image drawing DL is registered as the DL type.

In Step S912, the navigation processor 13 generates the text drawing DL used for drawing the text 302 to be included in the guide image on the basis of the text unit in the region data concerning each reuse region, the map display range, the direction in which the map is displayed, and the scale on which the map is displayed, and requests the VRAM manager 16 to write the generated text drawing DL in the VRAM 15. In Step S914, the navigation processor 13 generates the icon drawing DL used for drawing the icon 303 to be included in the guide image on the basis of the icon unit in the region data concerning each reuse region, the map display range, the direction in which the map is displayed, and the scale on which the map is displayed, and requests the VRAM manager 16 to write the generated icon drawing DL in the VRAM 15.

In response to the request for writing of the guide graphic drawing DL, the text drawing DL, or the icon drawing DL, the VRAM manager 16 allocates the DL area for the requested DL in the one-use DL area and writes the DL in the allocated DL area. The VRAM manager 16 generates the entry for the written DL in the VRAM mapping table, and registers the DL number of the written DL and the numbers of the blocks allocated to the DL area of the written DL in the generated entry. The navigation processor 13 generates the entry for the written DL in the DL management table, and registers the DL number and DL type of the written DL, the region number of the region corresponding to the written DL, and the data capacity of the written guide graphic drawing DL in the generated entry as the DL number, the DL type, the corresponding region number, and the data capacity, respectively.

In Step S916, the navigation processor 13 sets the regions other than the regions set as the reuse regions, among the regions calculated in Step S904, as normal drawing regions.

The navigation processor 13 performs the following steps for the normal drawing regions through Steps S918, S928, and S940.

In Step S920, the navigation processor 13 generates the text drawing DL used for drawing the texts 302 to be included in the guide image on the basis of the text unit in the region data concerning the region, the map display range, the direction in which the map is displayed, and the scale on which the map is displayed, and requests the VRAM manager 16 to write the generated text drawing DL in the VRAM 15. In Step S922, the navigation processor 13 generates the icon drawing DL used for drawing the icons 303 to be included in the guide image on the basis of the icon unit in the region data concerning the region, the map display range, the direction in which the map is displayed, and the scale on which the map is displayed, and requests the VRAM manager 16 to write the generated icon drawing DL in the VRAM 15.

In Step S924, the navigation processor 13 generates the 2D map image drawing DL for the region in the manner described above and requests the VRAM manager 16 to write the generated 2D map image drawing DL in the VRAM 15.

In response to the request for the writing of the 2D map image drawing DL, the VRAM manager 16 allocates the DL area for the requested DL in the reusable DL area. The VRAM manager 16 writes the DL in the allocated DL area, if the DL area can be allocated, and generates the entry for the written DL in the VRAM mapping table. The VRAM manager 16 registers the DL number of the written DL and the numbers of the blocks allocated to the DL area of the written DL in the generated entry and indicates to the navigation processor 13 that the writing succeeds. In response to the indication that the writing succeeds, the navigation processor 13 generates the entry for the written DL in the DL management table, and registers the DL number and DL type of the written DL, the region number of the region corresponding to the written DL, and the data capacity of the written guide graphic drawing DL in the generated entry as the DL number, the DL type, the corresponding region number, and the data capacity, respectively. If the VRAM manager 16 cannot allocate the DL area for the requested DL in the reusable DL area due to insufficient empty blocks, the VRAM manager 16 indicates to the navigation processor 13 that the reusable DL area is short of empty areas.

In Step S926, the navigation processor 13 determines whether the writing succeeds. If the navigation processor 13 determines that the writing succeeds, the navigation processor 13 terminates the process for the normal drawing region.

If the navigation processor 13 determines in Step S926 that the writing fails, that is, if the VRAM manager 16 indicates to the navigation processor 13 that the reusable DL area is short of empty areas in response to the request for writing of the 2D map image drawing DL, then in Step S938, the navigation processor 13 requests the VRAM manager 16 to delete the DL indicated by the DL number of the entry having the oldest final usage date and time, among the entries having the 2D map image drawing DL as the DL type in the DL management table, and goes back to Step S924. The navigation processor 13 may request the VRAM manager 16 to delete the DL indicated by the DL number of the entry having the oldest final usage date and time, among the entries having the 2D map image drawing DL as the DL type in the DL management table and having the data capacity greater than the data capacity of the DL that has issued the request for writing.

In response to the request for deletion of the 2D map image drawing DL, the VRAM manager 16 deletes the 2D map image drawing DL, the deletion of which from the reusable DL area in the VRAM 15 is requested. The VRAM manager 16 deletes the entry for the deleted DL from the VRAM mapping table and releases the blocks allocated to the DL area for the DL to provide empty blocks. The navigation processor 13 deletes the entry for the deleted 2D map image drawing DL from the DL management table.

If Steps S924, S926, and S938 for all the normal drawing regions have been finished, then in Step S930, the navigation processor 13 generates the system call to request drawing of the 2D map image drawing DL for each region, calculated in Step S904, in the manner described above and issues the generated system call to the 2D graphic engine 141. The 2D map image drawing DL for each region calculated in Step S904 is calculated as the DL having the DL number described in the entry in which the 2D map image drawing DL is registered as the DL type in the DL management table and in which the region number of each region calculated in Step S904 is registered as the corresponding region number in the DL management table.

In Step S932, the navigation processor 13 generates the system call to request drawing of the text drawing DL and the system call to request drawing of the icon drawing DL for each region, calculated in Step S904, and issues the generated system calls to the 2D graphic engine 141. In Step S934, the navigation processor 13 generates the system call to request drawing of the guide graphic drawing DL written in the VRAM 15 in Step S908 and issues the generated system call to the 2D graphic engine 141.

When navigation processor 13 has requested drawing of the DLs with the system calls, the navigation processor 13 registers the current date and time as the final usage date and time in the entries in the DL management table, in which the DL numbers of the requested DLs are registered.

After issuing the system calls to request drawing of the DLs to the 2D graphic engine 141, the navigation processor 13 waits for timeout and goes back to Step S902 to repeat the above steps.

The 2D guide image is drawn by the process described above.

As described above, in the process of drawing a 2D guide image, when the 2D map image drawing DL that has been written in the VRAM 15 can be used for drawing of the 2D map image 301 including the guide image 300 to be displayed, the navigation processor 13 uses the 2D map image drawing DL that has been written in the VRAM 15 to draw the 2D map image 301. As a result, the load for the generation of the 2D map image drawing DL on the navigation processor 13 can be reduced.

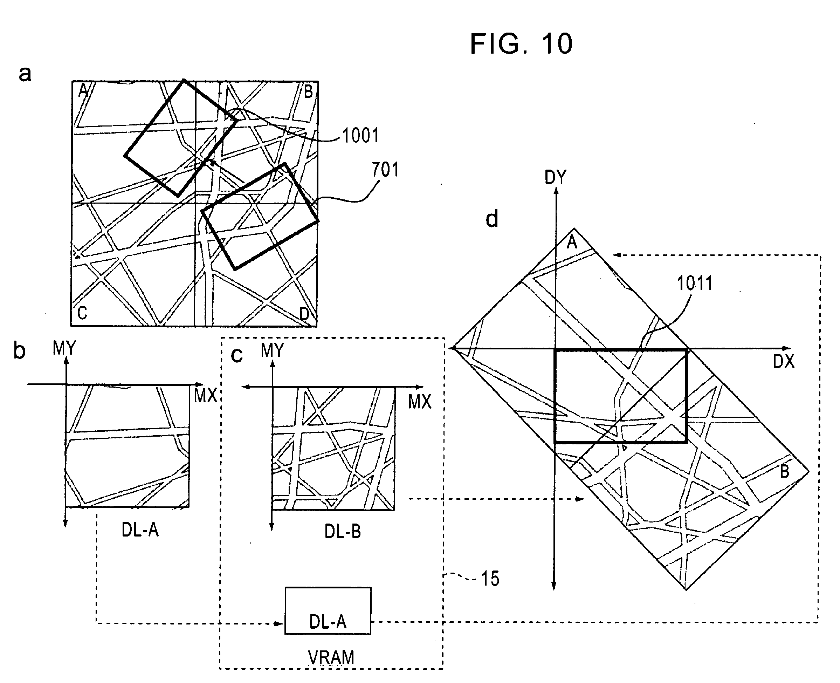

For example, in the process of drawing a 2D guide image, the navigation processor 13 generates the DL-B, which is the 2D map image drawing DL for the region B and which represents the two-dimensional map shown by b in Fig. 7, and the DL-D, which is the 2D map image drawing DL for the region D and which represents the two-dimensional map shown by c in Fig. 7, on the basis of the map display range 701 set across regions B and D, as shown by a in Fig. 7, writes the generated DL-B and DL-D in the VRAM 15, and issues the system calls. The navigation processor 13, then, generates an image of the range 711 shown by d in Fig. 7, corresponding to the map display range 701 shown by a in Fig. 7, as the 2D map image 301 and displays the guide image 300 on the generated 2D map image 301. If a map display range 1001 including part of the region A and part of the region B is set, as shown by a in Fig. 10, after the above steps, the navigation processor 13 generates the 2D map image 301 representing the two-dimensional map of the map display range 1001 in a manner described below.

Specifically, the navigation processor 13 generates a DL-A, which is the 2D map image drawing DL for the region A and which represents the three-dimensional map shown by b in Fig. 10, among the regions A and B part of which is included within the map display range 1001, and writes the generated DL-A in the VRAM 15. The navigation processor 13 generates only the DL-A because the 2D map image drawing DL for the region A is not held in the VRAM 15. The navigation processor 13 issues the system calls to request drawing of the written DL-A and the DL-B, which has been held in the VRAM 15, which represents the two-dimensional map shown by c in Fig. 10, and which is the 2D map image drawing DL for the region B, and causes the 2D graphic engine 141 to draw an image of a range 1011 shown by d in Fig. 10, corresponding to the map display range 1001 shown by a in Fig. 10, as the 2D map image 301. As a result, it is not necessary to generate the 2D map image drawing DL for the region B and to write the generated 2D map image drawing DL in the VRAM 15, among the regions A and B part of which is included within the map display range 1001, in order to generate the 2D map image 301.

The process of drawing a 3D guide image will now be described.

The process of drawing a 3D guide image is similar to the process of drawing a 2D guide image shown in Fig. 9, except that the 3D map image drawing DLs are processed instead of the 2D map image drawing DLs. In the process of drawing a 3D guide image, the system calls are issued to the 3D graphic engine 142, instead of the 2D graphic engine 141.

In the process of drawing a 3D guide image, as in the process of drawing a 2D guide image, if the 3D map image drawing DL that has been written in the VRAM 15 can be used for drawing the 3D map image 311 including the guide image 310 to be displayed, the 3D map image drawing DL that has been written in the VRAM 15 is used to draw the 3D map image 311. As a result, the load for the generation of the 3D map image drawing DL on the navigation processor 13 can be reduced.

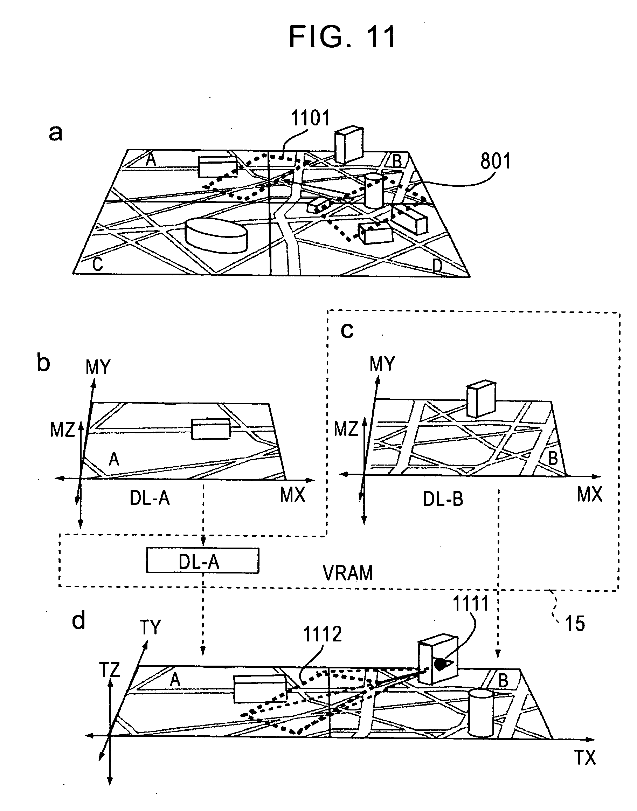

For example, in the process of drawing a 3D guide image, the navigation processor 13 generates the DL-B, which is the 3D map image drawing DL for the region B and which represents the three-dimensional map shown by b in Fig. 8, and the DL-D, which is the 3D map image drawing DL for the region D and which represents the three-dimensional map shown by c in Fig. 8, on the basis of the map display range 801 set across the regions B and D, as shown by a in Fig. 8, writes the generated DL-B and DL-D in the VRAM 15, and issues the system calls. The navigation processor 13, then, generates an image of the range 812 that is yielded when the three-dimensional maps of the regions B and D are observed from the point-of-view position 811 shown by d in Fig. 8 in the line-of-sight direction at the angle of view and that corresponds to the map display range 801 shown by a in Fig. 8 as the 3D map image 311 and displays the guide image 310 on the generated 3D map image 311. If a map display range 1101 is set so as to include part of the region A and part of the region B, as shown by a in Fig. 11, after the above steps, the navigation processor 13 generates the 2D map image 301 representing the three-dimensional map of the map display range 1101 in a manner described below.

Specifically, the navigation processor 13 generates a DL-A, which is the 3D map image drawing DL for the region A and which represents the three-dimensional map shown by b in Fig. 11, among the regions A and B part of which is included within the map display range 1101, and writes the generated DL-A in the VRAM 15. The navigation processor 13 generates only the DL-A because the 3D map image drawing DL for the region A is not held in the VRAM 15. The navigation processor 13 issues the system calls to request drawing of the written DL-A and the DL-B, which has been held in the VRAM 15, which represents the three-dimensional map shown by c in Fig. 11, and which is the 3D map image drawing DL for the region B, and causes the 3D graphic engine 142 to draw an image of a range 1112 shown by d in Fig. 11, which is yielded when the three-dimensional maps of the regions A and B are observed from a point-of-view position 1111 shown by d in Fig. 11 in the line-of-sight direction at the angle of view and which corresponds to the map display range 1101 shown by a in Fig. 11, as the 3D map image 311. As a result, it is not necessary to generate the 3D map image drawing DL for the region B and to write the 3D map image drawing DL in the VRAM 15, among the regions A and B part of which is included within the map display range 1101, in order to generate the 3D map image 311.

## Claims

1. A navigation apparatus comprising:
map data storing means (6) that stores map data including region map data that are provided for every region available and that defines a map of the region;
a graphic engine (141, 142) for drawing an image;
region display list storing means (15) that stores a region display list, which includes a drawing command to request drawing of each graphic element in the map of the region, that is generated for respective region and that defines an image representing the map of the region for the graphic engine;
region display list generating means (13) that is configured to, if the region display list concerning each region, at least part of which is included in a map display range being a geographical range in which the map is displayed, is not stored in the region display list storing means, generate the region display list only concerning the region (B, D), at least part of which is included within the map display range (701, 801), on the basis of the region map data concerning the region, included in the map data, and storing the generated region display list in the region display list storing means,
wherein the region display list generating means is configured to not generate the region display list concerning the region for which the stored region display list can be used if the region display list that has been stored in the region display list storing means concerns the region at least part of which is included in the map to be displayed,
wherein the graphic engine uses the region display list for every region, at least part of which is included within the map display range, to draw the image of the map of the map display range as the image of the map to be displayed, wherein the graphic engine is configured to not draw the image of the map on the basis of the region display list concerning each region, at least part of which is included within the map display range, outside the map display range, and
wherein the graphic engine performs coordinate conversion to the graphic elements represented by the drawing command included in the region display list concerning each region, at least part of which is included within the map display range, so that the graphic elements are included in the map of the map display range, and draws the converted graphic elements to draw the image of the map of the map display range as the image of the map to be displayed.

2. The navigation apparatus according to Claim 1,
wherein the region map data defines a three-dimensional map in the region,
wherein the region display list includes three-dimensional data concerning each graphic element in the three-dimensional map of the region, and
wherein the graphic engine renders, with respect to a predetermined point of view, an area corresponding to the map display range in a virtual three-dimensional world being a collection of the three-dimensional data included in the region display list concerning the region, at least part of which is included within the map display range, to draw the image of the three-dimensional map of the map display range as the image of the map to be displayed.

3. The navigation apparatus according to Claim 2, further comprising:
current-position calculating means for calculating a current position; and
current-position displaying means for displaying a current position mark representing the current position at a position on the displayed map, corresponding to the calculated current position,
wherein the graphic engine does not render a three-dimensional object in front of the position corresponding to the current position in the virtual three-dimensional world with respect to the point of view used in the rendering, among three-dimensional objects represented by the three-dimensional data.

4. The navigation apparatus according to Claim 1, 2, or 3,
wherein, if the region display list storing means does not have the empty space sufficient to store the generated region display list, the region display list generating means deletes the region display list selected according to predetermined criteria from the region display list storing means.

## Patentansprüche

1. Navigationsvorrichtung, aufweisend:
eine Kartendatenspeichereinrichtung (6), die Kartendaten speichert, die regionale Kartendaten beinhalten, die für jede verfügbare Region vorhanden sind und die eine Karte der Region definieren;
eine Grafikmaschine (141, 142) zum Zeichnen eines Bildes;
eine Speichereinrichtung (15) für eine regionale Anzeigeliste, die eine regionale Anzeigeliste speichert, die eine Zeichenanforderung beinhaltet, um das Zeichnen eines jeweiligen Grafikelements in der Karte der Region anzufordern, die für die jeweilige Region generiert wird und die ein Bild definiert, das die Karte der Region für die Grafikmaschine darstellt;
eine Erzeugungseinrichtung (13) für eine regionale Anzeigeliste, die dann, wenn die regionale Anzeigeliste bezüglich einer jeweiligen Region, von der zumindest ein Teil in einem Kartenanzeigebereich als geografischen Bereich enthalten ist, in dem die Karte angezeigt wird, nicht in der Speichereinrichtung für die regionale Anzeigeliste gespeichert ist, dazu ausgebildet ist, die regionale Anzeigeliste nur bezüglich der Region (B, D), von der zumindest ein Teil in dem Kartenanzeigebereich (701, 801) enthalten ist, auf der Basis der regionalen Kartendaten bezüglich der in den Kartendaten enthaltenen Region zu generieren sowie die generierte regionale Anzeigeliste in der Speichereinrichtung für die regionale Anzeigeliste zu speichern,
wobei die Erzeugungseinrichtung für die regionale Anzeigeliste dazu ausgebildet ist, die regionale Anzeigeliste bezüglich der Region, für die die gespeicherte regionale Anzeigeliste verwendet werden kann, nicht zu generieren, wenn die regionale Anzeigeliste, die in der Speichereinrichtung für die regionale Anzeigeliste gespeichert worden ist, die Region betrifft, von der zumindest ein Teil in der anzuzeigenden Karte enthalten ist,
wobei die Grafikmaschine die regionale Anzeigeliste für jede Region verwendet, von der zumindest ein Teil in dem Kartenanzeigebereich enthalten ist, um das Bild der Karte des Kartenanzeigebereichs als Bild der anzuzeigenden Karte zu zeichnen, wobei die Grafikmaschine dazu ausgebildet ist, das Bild der Karte auf der Basis der regionalen Anzeigeliste bezüglich eines jeweiligen Bereichs, von dem zumindest ein Teil in dem Kartenanzeigebereich enthalten ist, außerhalb des Kartenanzeigebereichs nicht zu zeichnen, und
wobei die Grafikmaschine eine Koordinatenumwandlung in die Grafikelemente ausführt, die durch die Zeichenanforderung dargestellt werden, die in der regionalen Anzeigeliste bezüglich der jeweiligen Region enthalten ist, von der zumindest ein Teil in dem Kartenanzeigebereich enthalten ist, so dass die Grafikelemente in der Karte des Kartenanzeigebereichs enthalten sind, sowie die umgewandelten Grafikelemente zeichnet, um das Bild der Karte des Kartenanzeigebereichs als Bild der anzuzeigenden Karte zu zeichnen.

2. Navigationsvorrichtung nach Anspruch 1,
wobei die regionalen Kartendaten eine dreidimensionale Karte in der Region definieren,
wobei die regionale Anzeigeliste dreidimensionale Daten bezüglich des jeweiligen Grafikelements in der dreidimensionalen Karte der Region beinhaltet, und
wobei die Grafikmaschine in Bezug auf einen vorbestimmten Blickpunkt einen Bereich, der dem Kartenanzeigebereich entspricht, in einer virtuellen dreidimensionalen Welt als Sammlung der dreidimensionalen Daten wiedergibt, die in der regionalen Anzeigeliste bezüglich der Region enthalten sind, von denen zumindest ein Teil in dem Kartenanzeigebereich enthalten ist, um das Bild der dreidimensionalen Karte des Kartenanzeigebereichs als das Bild der anzuzeigenden Karte zu zeichnen.

3. Navigationsvorrichtung nach Anspruch 2,
weiterhin aufweisend:
eine Berechnungseinrichtung für eine aktuelle Position, um eine aktuelle Position zu berechnen; und
eine Anzeigeeinrichtung für eine aktuelle Position, um eine aktuelle Positionsmarkierung, die die aktuelle Position darstellt, an einer Position auf der angezeigten Karte entsprechend der berechneten aktuellen Position anzuzeigen,
wobei die Grafikmaschine kein dreidimensionales Objekt vor der der aktuellen Position entsprechenden Position in der virtuellen dreidimensionalen Welt in Bezug auf den bei der Wiedergabe verwendeten Blickpunkt unter dreidimensionalen Objekten wiedergibt, die durch die dreidimensionalen Daten dargestellt werden.

4. Navigationsvorrichtung nach Anspruch 1, 2 oder 3,
wobei dann, wenn die Speichereinrichtung für die regionale Anzeigeliste keinen ausreichenden Leerraum zum Speichern der generierten regionalen Anzeigeliste aufweist, die Erzeugungseinrichtung für die regionale Anzeigeliste die ausgewählte regionale Anzeigeliste in Abhängigkeit von vorbestimmten Kriterien aus der Speichereinrichtung für die regionale Anzeigeliste löscht.

## Revendications

1. Dispositif de navigation comprenant :
des moyens de stockage de données de carte (6) qui stockent des données de carte incluant des données de carte de région qui sont fournies pour chaque région disponible et qui définissent une carte de la région ;
un moteur graphique (141, 142) pour dessiner une image ;
des moyens de stockage de liste d'affichage de région (15) qui stockent une liste d'affichage de région, qui inclut une commande de dessin pour demander le dessin de chaque élément graphique dans la carte de la région, qui est générée pour une région respective et qui définit une image représentant la carte de la région pour le moteur graphique ;
des moyens de génération de liste d'affichage de région (13) qui sont configurés pour, si la liste d'affichage de région concernant chaque région, dont au moins une partie est incluse dans une plage d'affichage de carte qui est une plage géographique dans laquelle la carte est affichée, n'est pas stockée dans les moyens de stockage de liste d'affichage de région, générer la liste d'affichage de région seulement concernant la région (B, D), dont au moins une partie est incluse dans la plage d'affichage de carte (701, 801), en fonction des données de carte de région concernant la région, incluses dans les données de carte, et stocker la liste d'affichage de région générer dans les moyens de stockage de liste d'affichage de région,
dans lequel les moyens de génération de liste d'affichage de région sont configurés pour ne pas générer la liste d'affichage de région concernant la région pour laquelle la liste d'affichage de région stockée peut être utilisée si la liste d'affichage de région qui a été stockée dans les moyens de stockage de liste d'affichage de région concerne la région dont au moins une partie est incluse dans la carte à afficher,
dans lequel le moteur graphique utilise la liste d'affichage de région pour chaque région, dont au moins une partie est incluse dans la plage d'affichage de carte, pour dessiner l'image de la carte de la plage d'affichage de carte comme l'image de la carte à afficher, dans lequel le moteur graphique est configuré pour ne pas dessiner l'image de la carte en fonction de la liste d'affichage de région concernant chaque région, dont au moins une partie est incluse dans la plage d'affichage de carte, à l'extérieur de la plage d'affichage de carte,
dans lequel le moteur graphique réalise une conversion de coordonnées aux éléments graphiques représentés par la commande de dessin incluse dans la liste d'affichage de région concernant chaque région, dont au moins une partie est incluse dans la plage d'affichage de carte, de telle manière que les éléments graphiques sont inclus dans la carte de la plage d'affichage de carte, et dessine les éléments graphiques convertis pour dessiner l'image de la carte de la plage d'affichage de carte comme l'image de la carte à afficher.

2. Dispositif de navigation selon la revendication 1,
dans lequel les données de carte de région définissent une carte tridimensionnelle dans la région,
dans lequel la liste d'affichage de région inclut des données tridimensionnelles concernant chaque élément graphique dans la carte tridimensionnelle de la région, et
dans lequel le moteur graphique rend, par rapport à un point de vue prédéterminé, une zone correspondant à la plage d'affichage de carte dans un monde tridimensionnel virtuel qui est une collection des données tridimensionnelles incluses dans la liste d'affichage de région concernant la région, dont au moins une partie est incluse dans la plage d'affichage de carte, pour dessiner l'image de la carte tridimensionnelle de la plage d'affichage de carte comme l'image de la carte à afficher.

3. Dispositif de navigation selon la revendication 2, comprenant en outre :
des moyens de calcul de position courante pour calculer une position courante ; et
des moyens d'affichage de position courante pour afficher une marque de position courante représentant la position courante dans une position sur la carte affichée, correspondant à la position courante calculée,
dans lequel le moteur graphique ne rend pas un objet tridimensionnel devant la position correspondant à la position courante dans le monde tridimensionnel virtuel par rapport au point de vue utilisé dans le rendu, parmi les objets tridimensionnels représentés par les données tridimensionnelles.

4. Dispositif de navigation selon la revendication 1, 2, ou 3, dans lequel, si les moyens de stockage de liste d'affichage de région n'ont pas un espace libre suffisant pour stocker la liste d'affichage de région générée, les moyens de génération de liste d'affichage de région effacent la liste d'affichage de région sélectionnée en fonction de critères prédéterminés des moyens de stockage de liste d'affichage de région.
